# EUROPEAN PATENT SPECIFICATION

(11) **EP 1 849 611 B1**
(45) Date of publication and mention of the grant of the patent: **29.10.2008**
(21) Application number: 07100639.9
(22) Date of filing: 17.01.2007
(51) Int. Cl.: B41J 2/45

(54) **Imaging system and method employing illumination field de-focus at the illumination modulator**
Bilderzeugungssystem und Verfahren unter Verwendung von Beleuchtungsfelddefokussierung am Beleuchtungsregler
Système et procédé d'imagerie utilisant une perte de mise au point du champ d'éclairage au niveau du modulateur d'éclairage

(30) Priority: 28.04.2006 US 413644
(43) Date of publication of application: 31.10.2007
(73) Proprietor: AGFA CORPORATION, Wilmington, MA 01887-1069 (US)
(72) Inventor: Sagan, Stephen F., Lexington, MA 02420 (US); Larsen, David B., Woburn, MA 01801 (US)
(74) Representative: Goedeweeck, Rudi

(56) References cited:
- EP-A- 0 672 925
- US-A- 4 253 724
- US-A1- 2002 075 378

## Description

### Technical Field

The invention generally relates to imaging systems, and relates in particular to imaging systems that employ an illumination modulator.

### Background Art

Conventional imaging systems for transferring an image to a printing plate typically include an illumination system for generating a field of illumination, and an imaging optics for applying the field of illumination in a modulated form to an imaging surface. Such illumination systems may provide a line of laser illumination so that a line of picture elements (or pixels) may be imaged at a time for efficiency in imaging. The field of illumination may be modulated by selectively controlling the illumination system as disclosed in US 4804975 A (YIP KWOK-LEUNG) 1989-02-14. Modulation can also occur by using an illumination modulator for selectively modulating the field of illumination.

Illumination systems that modulate the illumination field generally require that relatively high powers be switched on and off at fairly high speeds. In the field of pre-press imaging which is directed toward transferring an image via a laser source to a printing plate, the power requirements vary depending on the particular printing plate or medium which is being used. For thermal imaging onto a thermal printing plate, very high power is necessary to either ablate the material on the medium or chemical alter the medium layers by thermal reaction. The power necessary of the laser sources can range as high as 100 watts of energy. The total power dissipated on optical elements of an imaging system can be in the order of 100 watts of total power, or a concentrated focused energy as high as 12 kW/cm². Other systems, for example those that use violet printing plates require the lower energy of an ultra-violet light source.

The use of high power lasers for imaging can be expensive and difficult to use to achieve high quality and/or high resolution imaging. It is desirable, therefore, that illumination modulators be used in certain applications to permit the illumination system to provide a relatively uniform field of illumination. This allows the laser emitters to exhibit relatively uniform power consumption and be maintained at a relatively uniform temperature, which also contributes to uniformity of the illumination field.

Imaging systems such as those disclosed in US 6433934 B (REZNICHENKO YAKOV ET AL) 2002-O8-03 . may include an illumination source, a field lens system, an illumination modulator, imaging optics and an imaging surface. During imaging, the field lens system directs the illumination field onto the illumination modulator and the illumination modulator reflects the illumination field toward the imaging surface in one mode and reflects the illumination field away from the imaging surface in another mode. The modulator may, for example, include a Grating Light Valve (GLV^{™}) as sold by Silicon Light Machines of Sunnyvale, California U.S.A., and the system may direct, via the imaging optics, either the zero order reflection or the first order reflection toward the imaging surface in various embodiments.

Illumination modulators are often limited to the total amount of optical power incident on the modulator as well as the power density impinging on the device. Exceeding these limits can lead to poor performance or actual destruction of the device. For example, the GLV modulator has movable ribbons constructed of silicon nitride over-coated with aluminium for reflectivity. Applying excessive optical power will soften the ribbons and change the response characteristics of the device. Additionally, applying too much localized power from, for example, a tightly focused spot or illumination line can reach a power density of many kilowatts per square centimeter. This can cause the aluminium to be evaporated from the ribbons destroying the device.

### Disclosure of Invention

It is an object of the invention to provide an imaging system and an imaging method to defocus the illumination field at the illumination modulator and to refocus the illumination field at the imaging surface thereby reducing the optical power density impinging on the illumination modulator.

It is another object of this invention to provide an imaging system and an imaging method to remove the astigmatism between the illumination field and the image of the modulator at the image surface.

It is a further object of this invention to provide a method and apparatus to create a specific spot size at the imaging surface by modifying the anamorphic expansion factor of the refocusing device.

### Brief Description of Figures in the Drawings

The following description may be further understood with reference to the accompanying drawings.

Fig. 1 shows an illustrative diagrammatic view of the preferred embodiment of the invention with the illumination field defocused on the illumination modulator.

Fig. 2 is a top view of an anamorphic lens group with alternate positions.

Fig. 3A is a side view optical diagram of a prior art embodiment of an imaging system; Fig. 3B is a top view optical diagram of the illumination system plus the illumination modulator (grating light valve) of the imaging system of Fig. 3A; Fig. 3C is a top view optical diagram of the imaging optics of the imaging system of Fig. 3A; Fig. 3D is a diagram of a preferred aperture of elliptical shape for use in the imaging system of Fig. 3A.

Fig. 4A is a perspective view of an imaging medium positioned for imaging on an external drum and recorded upon by the imaging system of Fig. 3A; Fig. 4B is a detail of Fig. 4A.

### Mode(s) for Carrying Out the Invention

A preferred embodiment of the invention is directed towards solving the problem of allowing the use of one or more higher powered laser sources for maximizing imaging power, while simultaneously allowing the optical elements of the imaging optics in the imaging system to function properly, without deforming or burning up optical elements, particularly the modulator, within the imaging system.

The above-identified and other problems in the prior art are solved by a method for transferring an image via an illumination system and an illumination modulator to an image plane on a medium, where the method includes the steps of:
- generating a substantially uniform line of radiation from one or more illumination modules;
- impinging the uniform line of radiation onto an illumination modulator;
- lessening an intensity of the line of radiation on the illumination modulator by providing an astigmatism so that the line of radiation is out of focus on the illumination modulator, wherein a maximum defocus of an illumination field is constrained by a predetermined numerical aperture of the illumination system and by a predetermined operating dimension of the illumination modulator;
- modulating said defocused line of radiation via said illumination modulator to generate a line of modulated radiation;
- adjusting the line of modulated radiation to eliminate the astigmatism at the image plane using an anamorphic lens;
- adjusting image magnification of the line of modulated radiation onto the medium at the image plane; and
- adjusting image focus of the line of radiation onto the medium at the image plane.

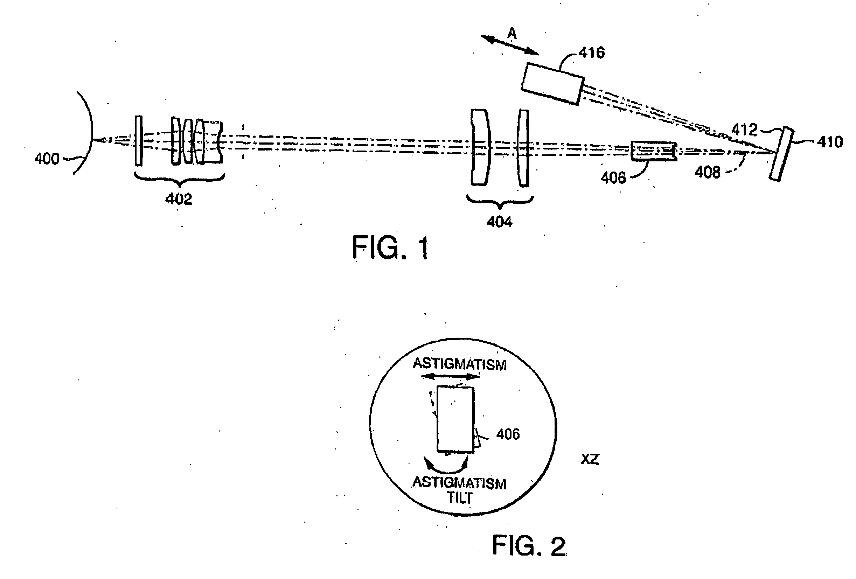

Turning to the preferred embodiment of figure 1, an illumination module 416 houses the laser source(s), an illumination modulator 410 for reflectively diffracting and modulating radiation received from the laser sources, a first lens group or element 406, a second lens group 404, a third lens group 402 and a medium 400 supported on an outside surface of an external drum imaging system.

In the preferred method a substantially uniform line of radiation is generated in the illumination module 416 typically containing one or more laser sources. The laser beams emitted from the illumination module 416 are received and reflected from a surface 412 of the illumination modulator 410, e.g. a GLV modulator. The illumination module 416 is translatable for example along in a linear direction A so that a first focus or an object plane focus of the line of radiation is offset and positioned for example at 408 away from the surface of the GLV modulator. This astigmatism is also defined as having the line of radiation to be out of focus on the GLV modulator. In this way, the concentration of energy or intensity of the line of radiation per square unit on the GLV surface 412 is lessened than if the object plane focus was located directly on the GLV surface 412. By doing so, the GLV can withstand greater dispersed radiation or energy from the illuminiation module 416 without causing damage or malfunction to the GLV modulator.

The first anamorphic lens group or lens element 406 is an anamorphic element which operates to transmit and realign the de-focused light received from the GLV modulator 410. The second lens group 404 is used to adjust image magnification of the line of modulated radiation onto the medium at the image plane. Third lens group 402 adjusts the image focus of the line of radiation onto the medium at the image plane which is coincident with the surface of the medium 400.

Figure 2 illustrates an alternate positioning of the anamorphic group 406 which allows for all points of the fast axis focus to be aligned to be coplanar with the medium 400. Rotation of the anamorphic group 406 eliminates astigmatic tilt and translation of the anamorphic group 406 eliminates astigmatism. The astigmatism being the non coplanarity between the fast axis illumination field image and the slow axis illumination modulator image. (See "Industrial application" for an explanation of the fast axis and slow axis directions.)

The preferred embodiment of the invention shown in figure 1 illustrates the focus or object plane focus 408 of the illumination field being offset from the surface 412 of the GLV 410 by an amount sufficient to cause the desired defocus of the illumination field on the GLV 410, thereby causing a broader fast axis spot to be incident on the GLV 410 reducing the peak power density of the illumination field on the GLV 410. The anamorphic group 406 is shown positioned to cause the fast axis focus of the illumination field to be coincident with the slow axis focus of the image of the medium 400.

### Industrial application

Imaging systems according to the invention may be used in a variety of systems such as, for example, thermal imaging systems that include an illumination field, an illumination modulator and an imaging surface (e.g., an external imaging drum). The modulator receives the illumination field via a field lens system and directs a modulated illumination field toward the imaging surface or medium via imaging optics. The illumination source, field lens system, modulator, imaging optics and imaging surface may be as disclosed in US 6433934 B (REZNICHENKO YAKOV ET AL) 2002-08-03 . The modulator may include a Grating Light Valve (GLV) as sold by Silicon Light Machines of Sunnyvale, California U.S.A.

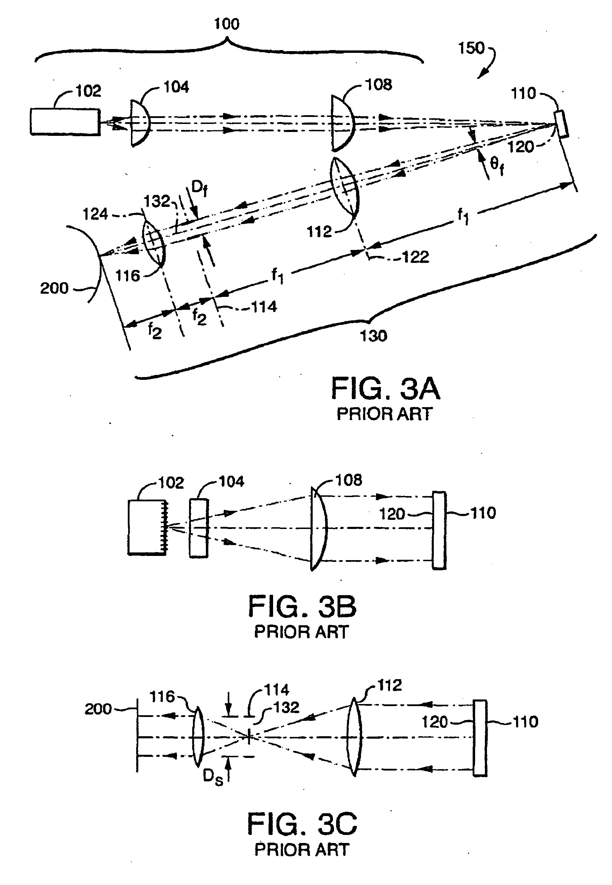

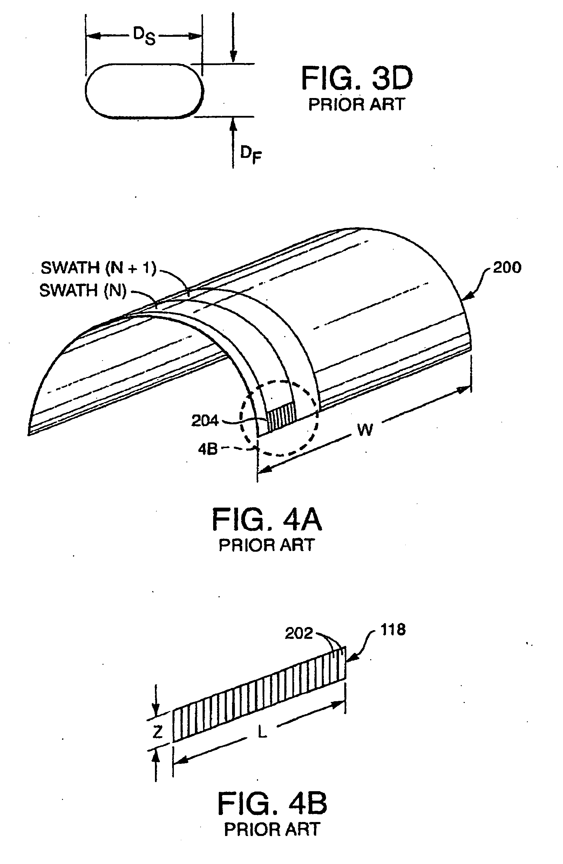

Figures 3A, 3B and 3C illustrate side and top views of a prior art structure and operation of an optical imaging system 150 which can be separated into two basic parts, the illumination system 100 and the imaging optics 130. The illumination system 100 generates and emits a line of continuous wave energy. The zero order diffractive imaging optics 130 receives the continuous wave energy or radiation at the object plane 120 of the GLV modulator 110, then transfers an image via zero order diffractive radiation through various components to a medium. In Figure 3A, the illumination system 100 takes the form of a line illumination module which includes a bar 102 of laser diodes for generating multiple laser beams, a fast axis collimating lens 104 for evenly dispersing the radiation in a fast axis direction and a slow axis collimating lens 108 for evenly dispersing the radiation in a slow axis direction. The laser bar 102 is a group of laser diodes which emit laser beams to the fast axis collimating lens 104. The slow axis direction corresponds to the movement of the optical head along the longitudinal axis of an imaging drum which parallels the linear direction along the width W (see figure 4A) of the image plane or medium 200, whereas the fast axis direction corresponds to the tracking of a laser beam along the radial direction of the drum, e.g. along a swath (N) of the medium 200. The type of light source used is dependent upon the particular media. In the preferred embodiment, the medium 200 is thermally sensitive, so an appropriate laser light source is used for imaging on that media. However, other sources of electromagnetic energy could be used, as necessary, for various applications. The medium 200, shown in figure 4A, is positioned as supported on an external drum (not shown). A line of illumination 118 (also referred to as a line of radiation), which is focussed on the medium 200 at the image plane, has a length L and a width Z. Each line of illumination 118 contains a predetermined number of sections 202 which, respectively, corresponds to some number of pixels on the GLV modulator 110. The line of illumination 118 is imaged at an initial position 204 along a first swath (N) on the sheet of medium 200. As the drum rotates, pixels along the line of illumination 118 are turned ON or OFF according to image information supplied by control electronics as well known in the art. Modulation of pixels is synchronized to the rotational speed of the drum. This procedure continues until imaging is complete on swath (N). The movement of the line of illumination 118 from swath (N) to (N+1) is facilitated by movement of the imaging system along the longitudinal axis (i.e. the slow axis) of the rotating drum. Then, the above-described imaging procedure is repeated for swath (N+1) and all additional swaths until the image is completely transferred onto the medium 200. The imaging procedure could also be accomplished by other means such as a spiral scan of the media as well known in the art.

## Claims

1. A method for transferring an image via an imaging system including an illumination modulator to an image plane on a medium, the method comprising the steps of:
- generating a uniform line of radiation from one or more illumination sources (416);
- impinging the line of radiation onto an illumination modulator (410);
- lessening an intensity of the line of radiation on the illumination modulator (410) by providing an astigmatism so that the line of radiation is out of focus on the surface (412) of the illumination modulator (410), wherein a maximum defocus of an illumination field is constrained by a predetermined numerical aperture of the illumination system and by a predetermined operating dimension of the illumination modulator (410);
- modulating said defocused line of radiation via said illumination modulator (410) to generate a line of modulated radiation;
- adjusting the line of modulated radiation to eliminate the astigmatism at the image plane using an anamorphic lens (406);
- adjusting image magnification of the line of modulated radiation onto the medium at the image plane; and
- adjusting image focus of the line of radiation onto the medium at the image plane.

2. An imaging system for transferring an image to a medium, said system comprising:
- one or more illumination sources (416) for generating one or more lines of radiation;
- an illumination modulator (410) which receives the radiation from the one or more illumination sources (416) and provides a modulated line of radiation to an image plane at the medium (400): **characterized in that** said one or more illumination sources (416) are intentionally positioned to cause the one or more lines of radiation to be out of focus on the illumination modulator (410) resulting in an astigmatism;
- an anamorphic lens or lens group (406) which receives the modulated line of radiation and which compensates and corrects the astigmatism; and
- a second lens or lens group (404) for adjusting image magnification and a third lens or lens group (402) for adjusting image focus of the line of modulated radiation onto the image plane of the medium (400).

## Patentansprüche

1. Ein Verfahren zur Übertragung eines Bildes auf eine Bildebene auf einem Medium über ein mit einem Belichtungsmodulator bestucktes Belichtungssystem, wobei das Verfahren durch folgende Schritte **gekennzeichnet** ist :
- Erzeugung einer gleichmäßigen Strahlungslinie aus einer oder mehreren Belichtungsquellen (416),
- Auftreffenlassen der Strahlungslinie auf einen Belichtungsmodulator (410), **dadurch gekennzeichnet, dass**
- die Intensität der Strahlungslinie auf dem Belichtungsmodulator (410) verringert und ein Astigmatismus geschaffen wird, wodurch die Strahlungslinie nicht fokussiert auf die Oberfläche (412) des Belichtungsmodulators (410) auftrifft, wobei eine maximale Defokussierung eines Belichtungsfeldes durch eine vorgegebene numerische Apertur des Belichtungssystems und durch eine vorgegebene Arbeitsgröße des Belichtungsmodulators (410) beschränkt wird,
- Modulieren der defokussierten Strahlungslinie über den Belichtungsmodulator (410) zur Erzeugung einer Linie modulierter Strahlung,
- Korrigieren der Linie modulierter Strahlung unter Verwendung einer Zerrlinse (406), um den Astigmatismus auf der Bildebene zu beseitigen,
- Korrigieren der Bildvergrößerung der auf die Bildebene auf dem Medium auftreffenden Linie modulierter Strahlung und
- Korrigieren des Bildbrennpunkts der auf die Bildebene auf dem Medium auftreffenden Strahlungslinie.

2. Ein Belichtungssystem zur Übertragung eines Bildes auf ein Medium, wobei das System folgende Elemente umfasst :
- eine oder mehrere Belichtungsquellen (416) zur Erzeugung einer oder mehrerer Strahlungslinien,
- einen Belichtungsmodulator (410), auf den die von der einen oder mehreren Belichtungsquellen (416) herrührende Strahlung auftrifft und der eine modulierte Strahlungslinie auf eine Bildebene auf dem Medium (400) auftreffen lässt, **dadurch gekennzeichnet, dass** die eine oder mehreren Belichtungsquellen (416) absichtlich so positioniert (ist) sind, dass die eine oder mehreren Strahlungslinien nicht fokussiert auf den Belichtungsmodulator (410) auftrifft (auftreffen) und so einen Astigmatismus schafft (schaffen),
- einen Zerrlinse oder Zerrlinsengruppe (406), in die die modulierte Strahlungslinie eintrifft und die den Astigmatismus ausgleicht und korrigiert, und
- eine zweite, die Bildvergrößerung korrigierende Linse oder Linsengruppe (404) und eine dritte, den Bildbrennpunkt der auf die Bildebene des Mediums (400) auftreffenden modulierten Strahlungslinie korrigierende Linse oder Linsengruppe (402).

## Revendications

1. Un procédé pour le transfert d'une image vers un plan d'image sur un support à l'aide d'un système d'exposition muni d'un modulateur d'exposition, ledit procédé consistant à :
- générer une ligne de rayonnement uniforme à partir d'une ou de plusieurs sources d'exposition (416),
- faire frapper la ligne de rayonnement sur un modulateur d'exposition (410), **caractérisé en ce que**
- l'intensité de la ligne de rayonnement frappant sur le modulateur d'exposition (410) est réduite et qu'il est créé un astigmatisme de façon à ce que la ligne de rayonnement frappe de façon non focalisée sur la surface (412) du modulateur d'exposition (410), une défocalisation maximale d'un champ d'exposition étant limitée par une ouverture numérique prédéterminée et par des dimensions opérationnelles prédéterminées du modulateur d'exposition (410),
- moduler la ligne de rayonnement défocalisée à l'aide du modulateur d'exposition (410) afin de générer une ligne de rayonnement modulé,
- corriger la ligne de rayonnement modulé en utilisant une lentille anamorphique (406) afin d'éliminer l'astigmatisme sur le plan d'image,
- corriger l'agrandissement d'image de la ligne de rayonnement modulé frappant sur le plan d'image sur le support, et
- corriger le foyer d'image de la ligne de rayonnement frappant sur le plan d'image sur le support.

2. Un système d'exposition pour le transfert d'une image sur un support, ledit système comprenant :
- une ou plusieurs sources d'exposition (416) servant à générer une ou plusieurs lignes de rayonnement,
- un modulateur d'exposition (410) sur lequel frappe le rayonnement provenant de ladite (desdites) source(s) d'exposition (416) et permettant à une ligne de rayonnement modulé de frapper sur un plan d'image sur le support (400),
**caractérisé en ce que** la (les) source(s) d'exposition (416) est (sont) positionnée(s) de façon à permettre à la (aux) ligne(s) de rayonnement de frapper de façon non focalisée sur le modulateur d'exposition (410) et de créer ainsi un astigmatisme,
- une lentille anamorphique ou un ensemble de lentilles anamorphiques (406) recevant la ligne de rayonnement modulé et compensant et corrigeant l'astigmatisme, et
- une deuxième lentille ou un deuxième ensemble de lentilles (404) servant à corriger l'agrandissement d'image et une troisième lentille ou un troisième ensemble de lentilles (402) servant à corriger le foyer d'image de la ligne de rayonnement modulé frappant sur le plan d'image du support (400).
